Europäisches Patentamt

European Patent Office

Office européen des brevets

(11) Publication number: **0 063 965**
**A1**

## (12) EUROPEAN PATENT APPLICATION

(21) Application number: **82302216.5**

(22) Date of filing: **29.04.82**

(51) Int. Cl.³: **F 16 B 21/14**

(30) Priority: **29.04.81 GB 8113133**

(43) Date of publication of application: **03.11.82**
**Bulletin 82/44**

(84) Designated Contracting States: **AT BE CH DE FR IT LI
LU NL SE**

(71) Applicant: **THE CLAY CROSS COMPANY LIMITED, Clay
Cross Chesterfield Derbyshire, S45 9NG (GB)**

(72) Inventor: **Knight, Peter David, of "Crooksbury" 10 New
Farm Lane, Nuthall Nottingham (GB)**

(74) Representative: **Thomson, Roger Bruce et al, POLLAK
MERCER & TENCH High Holborn House 52-54 High
Holborn, London WC1V 6RY (GB)**

(54) **Retaining clip.**

(57)    A retaining clip (12) comprises a first portion, such as a
spigot (16), arranged to be received in a hole or socket (14)
in a receiving body (10) to provide positive location for the
clip on the body, and a second portion comprising at least
one arm (18) arranged resiliently to grip the peripheral
surface of the receiving body (10) to prevent accidental
detachment of the clip from the body. Preferably, the clip
has two arms (18) which each subtend an angle of between
120° and 150° at the centre of curvature. The spigot (16)
does not need to be a tight fit in the hole (14). Two clips can
be used, one at each end of a first element, to limit and
define movement of that element relative to a second ele-
ment. The arms (18) may be provided with raisend pips (28)
to enable the arms to be flexed laterally and generate a
lateral bias force.

- 1 -

RETAINING CLIP

SPECIFICATION

This invention relates to clips, and is particularly concerned with clips which are adapted to be retained in place on a pin, shaft, axle or other body to which the clip is fastened, either to act as a stop or to act in the manner of a circlip to prevent axial movement of the body to which the clip is fastened.

The clip of the present invention is particularly adapted to be fitted to a pin, shaft, axle or other elongate member, which has a hole therein or therethrough to receive a portion of the clip.

Various types of retaining clip or fastening are known. For example, in the case of a pin or bolt it is known to provide a hole through the stem of the pin or bolt and to push a splitpin or other retainer through the hole to prevent the pin or bolt being withdrawn from a socket in which it is received. It is also well known to use a circlip as a retaining element, the circlip being fitted into a circumferential groove around the stem of an elongate member such as a bolt or shaft, thereby to prevent axial movement of the elongate member.

It is an object of the present invention to provide an improved retaining clip which is extremely simple in configuration but which provides two important advantages. Firstly, the clip is adapted to be retained in place as a simple pushfit on a receiving body, and secondly, in spite of this simple pushfit attachment, the clip is prevented from accidental detachment from the receiving body. In other words, the retaining clip of the present invention is not only held in place simply and reliably on the receiving body, but it is also reliably located on the receiving body in terms of it not being able to move relative to the receiving body, either axially, circumferentially, or in any other direction.

In accordance with the present invention there is provided a clip comprising a first portion arranged to be received in a hole or socket in a receiving body as a locating means, and a second portion comprising at least one arm arranged resiliently to grip the peripheral surface of the receiving body.

Preferably, the second portion comprises a pair of arms extending one to each side of a central spigot which constitutes the first portion.

Preferably, the arm or arms is/are arranged to be a snapfit on to the receiving body, and the or each arm may be a resilient element having an arcuate surface for contact with the peripheral surface of the receiving body.

Although the retaining clip of the present invention can be used with receiving bodies of any suitable cross-sectional shape, it is particularly suited for use with receiving bodies of generally circular cross-section. With such receiving bodies the arm or arms can snap over the elongate receiving body and partially encircle it.

The clip is particularly suitable for use with cylindrical members, such as pins, shafts, axles and the like, in which case the resilient arms are preferably arcuate with a radius of curvature matched to the curvature of the cylindrical member to which the clip is fastened.

The clip can readily be moulded as one piece from a plastics material, such as polyacetal. The portion of the clip which is received in the hole or socket in the receiving body can be fitted into the hole or socket with some degree of play, because of the gripping action of the arm or arms around the receiving body. However, in the preferred embodiments of the invention, the first portion of the clip which is received in the hole or socket is a pushfit into the hole or socket, and indeed may be roughened or provided with ribs for example, in order to increase the frictional contact between the spigot and the surface of the hole or socket.

A number of embodiments of retaining clip in accordance with the invention will now be described by way of example and with reference to the accompanying drawings, in which:

Fig. 1 is an end view, partly in section, showing a first embodiment of clip fastened to a shaft;

Fig. 2 is a side view of the clip and shaft of Fig.1;

Fig. 3 is a schematic view of a second embodiment of retaining clip in accordance with the invention, having just one arm;

Fig. 4 is a schematic representation of another embodiment of retaining clip in accordance with the invention, incorporating two pairs of gripping arms;

Fig. 5 illustrates how two retaining clips in accordance with the invention can be used to define the limits of travel of one elongate member relative to another;

Figs. 6A and 6B are end and side views respectively of another embodiment of clip in accordance with the invention; and,

Fig. 7 is a schematic representation, partly in section, of the use of a clip similar to that of Figs. 6A and 6B to prevent end float of a roller.

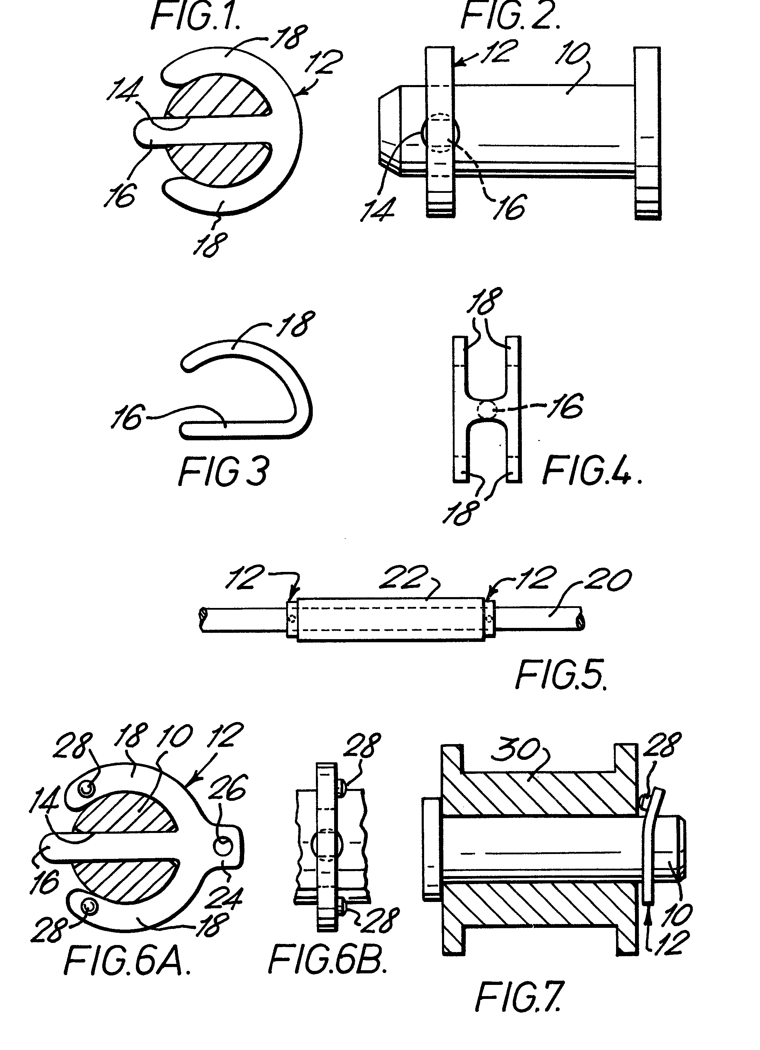

Referring first to Figs. 1 and 2 of the drawings, there is shown a clevis pin 10 to which the clip, indicated generally at 12, is fastened. The clevis pin 10 has a hole 14 formed therethrough adjacent to one end. It will be appreciated that instead of the clevis pin one could use the clip with any pin, shaft, axle or other receiving body having a hole formed therethrough. Moreover, the retaining clip of the present invention is also usable with receiving bodies which are provided with a blind socket, rather than with a hole extending fully through the thickness of the body.

The clip 12 comprises a central spigot 16 which is fitted into and through the hole 14 in the clevis pin 10 and which thereby provides a positive location for the clip on the pin. The clip is retained positively on the pin 10 by the provision of a pair of arcuate arms 18, formed symmetrically one on each side of the central spigot 16, and arranged to snap over the pin 10 as the spigot 16 is pushed into the hole 14. The arms 18 are made sufficiently resilient to be deformable to pass around the pin and yet grip the pin sufficiently firmly to prevent accidental detachment of the clip from the pin.

In practice, the clip 12 would be made in a range of sizes so that the curvature of the arms 18 can be appropriately matched to the curvature of the pin or other receiving body to which it has to be fastened. The clip is preferably made as a one-piece moulding of a resilient plastics material, for example, of nylon or polyacetal.

As will be appreciated from Fig. 2 of the drawings, the central spigot 16 of the clip does not need to be circular in cross-section, here being shown as of generally square cross-section. The spigot 16 does not need to be a tight fit in the hole 14. The resilient arms perform the gripping function, and the central spigot serves to prevent longitudinal displacement of the clip along the length of the pin 10.

Alternatively, if one wishes to increase the frictional contact between the surface of the spigot 16 and the wall surface of the hole or socket into which the spigot is fitted, the surface of the spigot 16 can be roughened, or provided with ribs or some other configuration shaped to increase the frictional contact. Although in the embodiments shown in Figs. 1 and 2 the central spigot 16 has a generally square cross-section, the spigot can alternatively have a circular or indeed any polygonal cross-section.

Fig. 3 shows an alternative, simplified embodiment of retaining clip in accordance with the invention. Here, the spigot 16 is again adapted to be fitted into a hole or socket in a receiving body, but in this embodiment only one resilient gripping arm 18 is provided. Even though this clip has only the one gripping arm, it still performs the dual function of being positively located on the receiving body without being accidentally detachable from the receiving body. This embodiment of clip is particularly appropriate for use with elongate receiving bodies which run close to a wall, a floor, or indeed any other body which is immediately adjacent to the receiving body and which would prevent use of the type of clip shown in Figs. 1 and 2 where there has to be space for two arms to snap around the peripheral surface of the receiving body.

Fig. 4 shows yet another embodiment of retaining clip in accordance with the invention. Here, four gripping arms 18 are provided as extensions from a single central spigot 16. The provision of four arms 18, arranged in pairs two on each side of the central spigot 16, provides enhanced gripping of the receiving body.

In each of the embodiments of clip described above the or each arm 18 is of such a length that its arcuate surface subtends an angle of more than 90° at the centre
of curvature.    Preferably, the arcuate surface of the or'
each arm subtends an angle of between 120° and 150° at
the centre of curvature.

Referring now to Fig. 5 of the drawings, this shows
one way in which the retaining clips of the present invention can be used to prevent movement of one body relative
to another.    Here, two retaining clips 12 are fitted into
respective holes in an elongate shaft 20 which carries a
roller 22.    The clips 12 act as end stops to define the
limits of axial movement of the roller 22 relative to the
shaft 20 on which it is mounted.

Although in the embodiments described above the
receiving body has been circular in cross-section, the
clip of the present invention is not limited to use with
circular cross-section receiving bodies.    By suitably
modifying the configuration of the gripping arm or arms
one can adapt the clip for use with a receiving body of
substantially any cross-section.    For example, with a
square or rectangular cross-section receiving body having
a transverse hole therethrough, the retaining clip would
be shaped as the head of a three-pronged fork or trident,
preferably with the outer limbs being provided with inturned lugs or catches adapted to snap into place at the
back of the receiving body when the clip is pushed into
place.

Figs. 6A and 6B show a modified embodiment of clip
12.    In this embodiment the arcuate portion of the clip
is provided with an outwardly projecting portion 24 in substantial alignment with the inwardly projecting spigot 16.
This projecting portion 24 is intended to provide a means
of gripping the clip more easily, both for fitting it and
for removing it.    To this end, the projecting portion 24
may be provided with a hole 26, as shown, or alternatively
with a rib or ribs or some other means whereby it can more readily be grasped. An equivalent projecting portion can of course be provided on any of the other embodiments of clip hereinbefore described. Also, each of the arms 18 of the clip is provided with a raised pip 28 adjacent to the free end of the arm. Fig. 7 illustrates how these pips 28, combined with the resilience of the arms 18, can prevent end float of a roller 30 relative to a pin 10 extending therethrough. The raised pip or pips 28 cause the arms to spring out of the plane of the clip and to exert a force against the outer end face of the roller 30 which urges the roller against the head of the pin. A pip 28 may be provided on just one arm 18 as shown in Fig.7 or on each arm.

- 8 -

0063965

CLAIMS :

1. A clip comprising a first portion (16) arranged to be received in a hole or socket (14) in a receiving body (10;20) as a locating means, and a second portion comprising at least one arm (18) arranged resiliently to grip the peripheral surface of the receiving body.

2. A clip as claimed in claim 1, characterised in that said second portion comprises a pair of arms (18) extending one to each side of a central spigot (16) which constitutes said first portion.

3. A clip as claimed in claim 1, characterised in that said second portion comprises four arms (18) extending in pairs two to each side of a single central spigot (16).

4. A clip as claimed in any preceding claim, characterised in that said arm or arms (18) is/are arranged to be a snap fit onto the receiving body (10;20).

5. A clip as claimed in any preceding claim, characterised in that the or each arm (18) is a resilient element with an arcuate surface for contact with the peripheral surface of the receiving body (10;20).

6. A clip as claimed in claim 5, characterised in that the or each arm (18) is of such a length that its said arcuate surface subtends an angle of more than 90° at the centre of curvature.

7. A clip as claimed in claim 6, characterised in that the arcuate surface of the or each arm (18) subtends an angle of between 120° and 150° at the centre of curvature.

8. A clip as claimed in any preceding claim, characterised in that said first portion is a polygonal cross-section spigot.

9. A clip as claimed in any preceding claim, characterised in that the surface of said first portion which engages the hole or socket (14) is ribbed, roughened or otherwise shaped to increase the frictional contact.

10. A clip as claimed in any preceding claim, characterised in that said second portion includes means (24) projecting outwardly relative to said first portion and providing means (24,26) to grip the clip.

11. A clip as claimed in any preceding claim, characterised in that the arm or each arm or one or more of the arms is provided with a projection (28) extending proud of the surface of the arm (18) and laterally of the plane extending centrally through the first and second portions.

12. A clip as claimed in any preceding claim, moulded as one piece from a plastics material.

1/1

0063965

FIG.1.

FIG.2.

FIG 3

FIG.4.

FIG.5.

FIG.6A.

FIG.6B.

FIG.7

0063965

European Patent
Office

EUROPEAN SEARCH REPORT

Application number

EP 82 30 2216

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-1 010 993 (VELITCHKO) <br> *Page 2, lines 22-47; figures 1-4* | 1-7 | F 16 B 21/14 |
| Y | | 8,9 | |
| Y | FR-A-2 258 277 (GUTBROD) <br> *Figure* | 8 | |
| Y | FR-A-1 358 625 (BACH) <br> *Abstract; figures 1,3* | 9 | |
| X | US-A-2 098 185 (HANNAFORD) <br><br> *Page 2, left-hand column, line 69 - right-hand column, line 2* | 1,2,4-7,9 | |
| X | AT-B- 342 373 (MATTHIAS) <br><br> *Page 2, lines 34-36; figures 1-2* | 1,2,4-7,10 | TECHNICAL FIELDS SEARCHED (Int. Cl. 3) <br><br> F 16 B |
| X | US-A-3 263 552 (FISCHER) <br><br> *Column 2, lines 48-56; column 3, lines 3-13; figures 1,3* | 1,2,4-7,10,11 | |
| X | GB-A-1 032 307 (RAYMOND) <br><br> *Claim 1* | 1,2,4-7,10,12 | |

The present search report has been drawn up for all claims

| Place of search | Date of completion of the search | Examiner |
|---|---|---|
| THE HAGUE | 23-07-1982 | VAN DER WAL W |